(19) Europäisches Patentamt

European Patent Office

Office européen des brevets

(11) EP 0 614 738 B1

(12) EUROPEAN PATENT SPECIFICATION

(45) Date of publication and mention
of the grant of the patent:
26.02.1997 Bulletin 1997/09

(51) Int. Cl.$^6$: **B28D 1/22**, B23Q 11/00

(21) Application number: 93107090.8

(22) Date of filing: 30.04.1993

(54) **Device for controlling the deformation of the guide bars of the carrier of a ceramic tile scoring tool**

Vorrichtung zum Beherrschen der Verformung der Führungsstangen eines Trägers für ein Fliessenschneidwerkzeug

Dispositif pour le contrôle de la déformation des barres de guidage d'un support pour un outil de coupe pour des carreaux

(84) Designated Contracting States:
AT CH DE ES FR IT LI

(30) Priority: 08.03.1993 IT VA930008

(43) Date of publication of application:
14.09.1994 Bulletin 1994/37

(73) Proprietor: BREVETTI MONTOLIT S.P.A.
I-21050 Cantello (Varese) (IT)

(72) Inventors:
• Montoli, Vincenzo
I-21050 Cantello (Varese) (IT)
• Casartelli, Luigi
I-21050 Cantello (Varese) (IT)

(74) Representative: Sassi, Romano
UFFICIO BREVETTI VARESINO
Viale Belforte 89
21100 Varese (IT)

(56) References cited:
CH-A- 384 787          FR-A- 1 175 303
FR-A- 2 497 533        GB-A- 115 426
US-A- 2 750 674

• DATABASE WPI Week 8534, Derwent
Publications Ltd., London, GB; AN 85-204926 &
EP-A-0 152 362 (NEYPRIC)

## Description

The present invention relates to a process and means for dynamically spanning the guiding bars in a tile cutting machine of the kind comprising a bridge guide including such bars in the form of two parallel beam-like rods providing a guide for a scoring tool carrier (cf. FR-A-2 497 533), wherein said scoring tool carrier is shiftably mounted in the groove comprised by said parallel beam-like rods in order to be guided thereby as well as to keep them duly spaced apart.

At the present state of the art the pair of bars guiding the carrier of disc like carbide tool, for scoring ceramic tiles, in tile cutting machines, particularly when the same bars are rectangular in cross-section, with their long side in vertical attitude, are in all cases exclusively supported at their ends. Whereas, mainly in the middle section of the bars, they are lacking of transverse strength in a direction perpendicular to the main side thereof.

Indeed, the working strains are directed mainly in substantially the vertical direction, direction in which, with advantage ratios between four and ten times, the power applied is in the order of several tenth of Kgs.

This power is intended to endow the scoring. Whereas, the scoring quality is strongly dependant from the transverse strength of tool carrier guides or tool carrier guiding bars. In conventional conditions the tool carrier guides or bars never work together. As a consequence, when the tool carrier is driven to perform the scoring stroke, the side clearances and deformations provided by transverse thrusts in both opposite directions, result in poor and inaccurate scorings, which in turn result in cuts of bad quality.

Particularly unstable is the movement of tool carrier of the push kind. In practice the control stick of the tool carrier becomes liable to swing, whereby the other end thereof, carrying the disk-like tool, is correspondingly unstable. Thus the carbide tool, which is the most critical member is unduly forced, whereby its effectiveness and life are heavily reduced. And more than that, the two effects of unstableness increased each other.

Moreover with the wear of the machine and/or lack of sturdiness of various members the carbide tool consume results to be higher while the scoring and therefore the corresponding cut result to be poor and inaccurate and the tile waste increased. For endeavouring to go beyond this drawback, sometimes it was preferred to provide complicated and or heavy and/or cumbersome arrangements such those disclosed by FR-A-2497533, CH-A-384787 and GB-A-115426. Quite often the pair of parallel guiding bars were made of circular cross section and tool carrier body surrounded the same guiding bars. In one case (FR-A-2497533), to cooperate with the pair of circular cross section guiding bars, an adjustable set of four wheels was included, which provided a simply unbalanced centrifugal effect.

Of course these remedies were rather expensive and very difficult to manufacture, due to the high precision required. However when the precision failed, due working defects or to wearing, no remedies could be found. In some cases (CH-A-384787 and GB-A-115426) it was preferred to increase the cross-section of a single guide bar, thus adding weight to the machine and compromising, therefore, the lightness thereof, which is one of the most important features of the machine, however without obtaining any particular advantage.

In conventional tile cutting machines, in the most unfavourable conditions, when the tool carrier is in the middle point the camber $F_m$ is:

$$F_m = \frac{Pl^3}{192\, E\, I}$$

wherein:

P = concentrated load (in the middle point);
l = bar length (considered as a restrained beam);
E = Modulus;
I = Moment of inertia.

The invention as claimed is intended to remedy these drawbacks. The inventors with ingenious perception have conceived a process and means for dynamically spanning the bar pairs guiding the carrier of disc like tool, for scoring ceramic tiles, wherein a bridge and a pair of antagonist members, which links the same bars together provide a reduction of the camber of said rods from:

$$F_m = \frac{Pl^3}{192\, E\, I'}$$

$$\text{to } F_m = \frac{Pl'^2 \cdot l''^2}{3EIl/2}\, /2$$

wherein:

P = concentrated load (in the middle point);
l = bar length (considered as a restrained beam);
l' = distance between the device and the load point;
l'' = distance between the load point and the nearest bar fixed end of the bars;
E = Modulus;
I = Moment of inertia.

In accordance with a preferred embodiment of the present invention, the device obtained, applied to a tool carrier of the kind comprising an axle, is provided with two poles, providing each a pivot with a screwed end to rotatably receive a wheel, wherein the non screwed pivot section thereof is slightly shorter, than the thickness of the wheel; so that with self-locking screwed nuts it is possible to adjust the distance between the inner sides of the wheels, in order that the same distance is made equal to the real distance between the outer sides of the bars.

The resulting device, applied to another tool carrier, includes that on the top of the tool carrier, is provided, by two screws, with a support. The projecting poles of such support are provided with two bores, which receive by means of screws, screwed nuts and sleeves, two antagonist wheels whose axle has vertical attitude. The support bearing the unit is provided with at least two bores, wherein the former provides a fulcrum and the latter an adjusting means, which acts in connection with a screw and a washer. Thus, by adjusting the inclination of the support around the bore it is possible to set, with accuracy, the tangential distance between the wheels

In accordance with another preferred embodiment of the present invention, on t he top tool carrier is applied, by welding, a support, which is comprised by a three step bridge, wherein the vertical poles of the support include a screwed bore, each bore being provided with a rod made of antifriction material, adjustable by a screw nut.

One way of carrying out the invention is described in detail below, with reference to drawings, which illustrate only one specific embodiment, in which:.

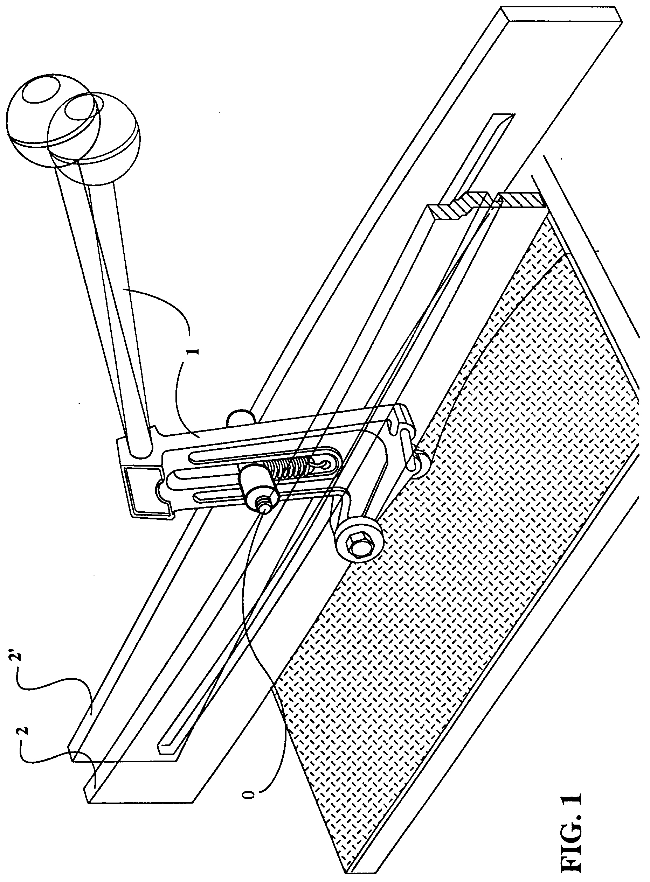

Figure 1 is the perspective view, of an assembled conventional tool carrier, shown in the attitude of scoring a tile. This figure shows exaggeratedly the defect occurring when the bars, under load, are deformed.

Figure 2 is the perspective exploded view, of a tool carrier of the kind shown in figure 1, in which, in particular, have been exploded the details actuating the process according to the present invention.

Figure 3 is a perspective view, of the tool carrier of figure 2 which is in itself assembled and mounted on a pair of bars.

Figure 4 is substantially a repetition of figure 2 but with respect to another tool carrier and another more expensive device, according to the present invention.

Figure 5 is a perspective view, of the tool carrier of figure 4, which is in itself assembled and mounted on a pair of bars comprising the tool carrier guide.

Figure 6 is substantially a repetition of figures 2 and 4, but with respect to another tool carrier and another cheaper device, according to the present invention..

Figure 7 is a perspective view, of the tool carrier of figure 6, which is in itself assembled and mounted on a pair of bars, comprising the tool carrier guide.

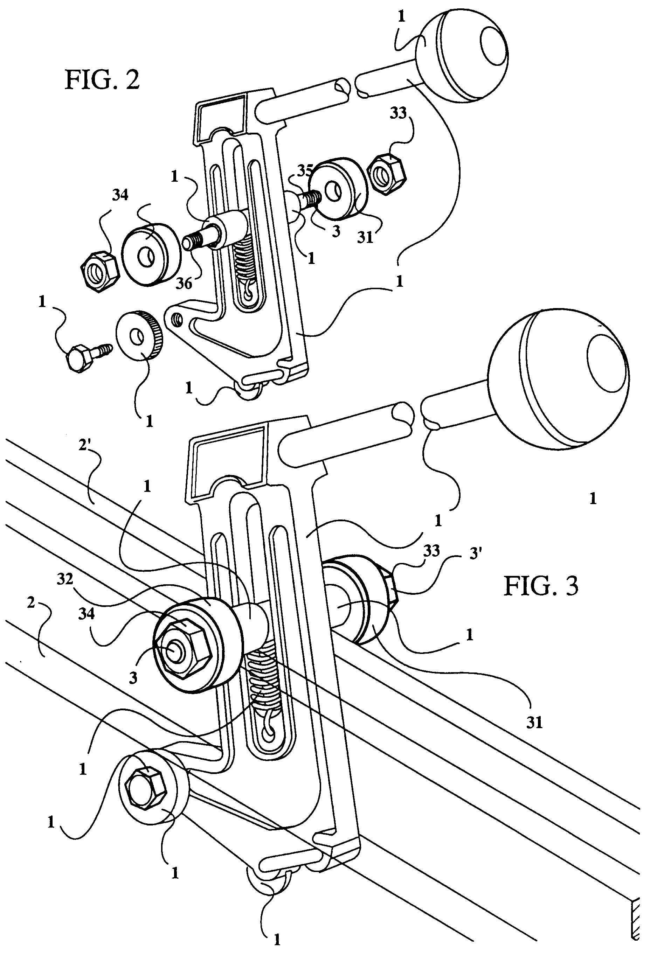

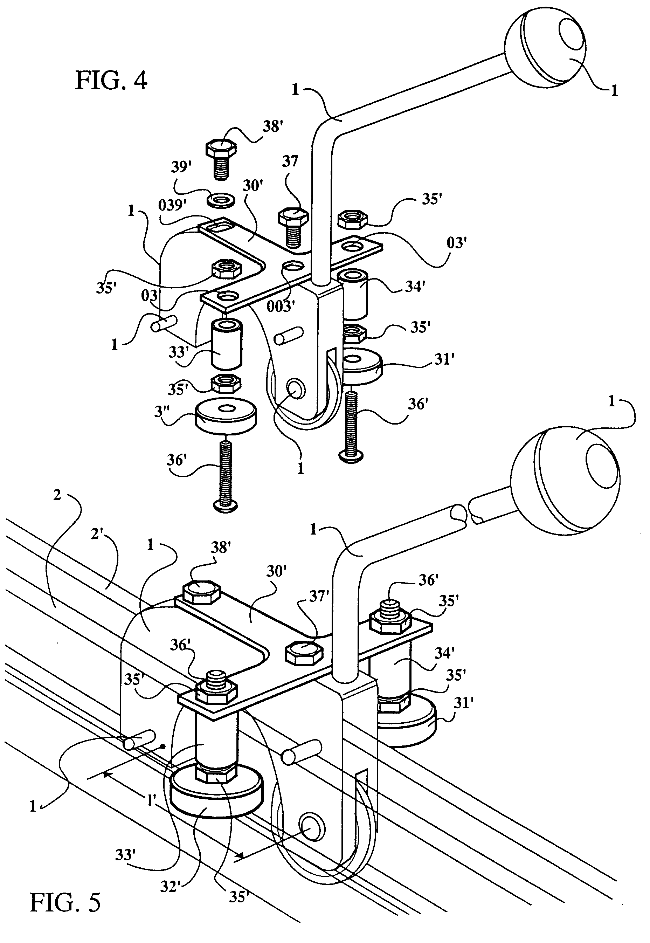

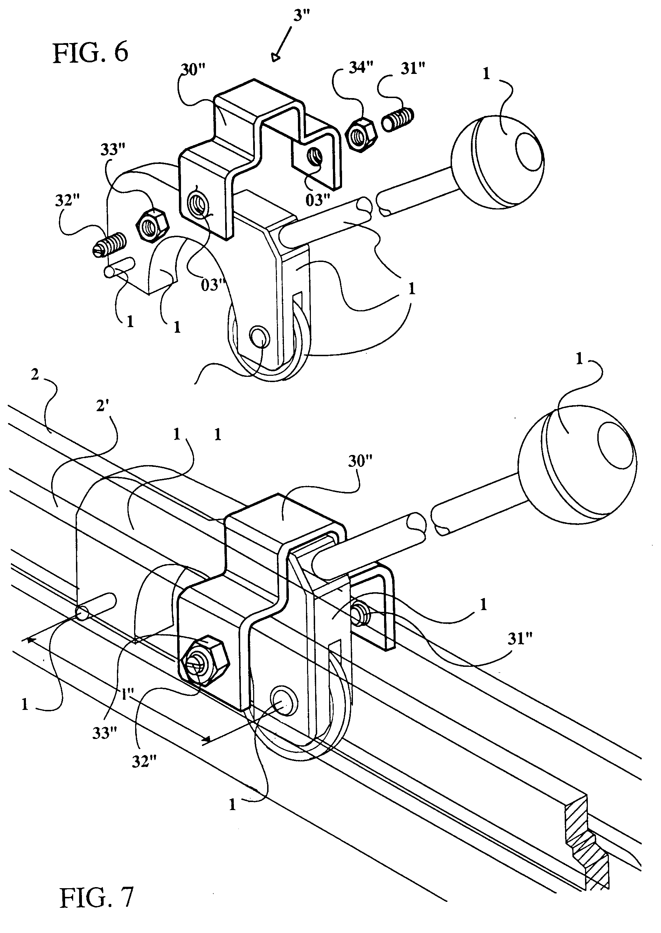

Referring now to the figures of the drawings, in all cases, thus even in the conventional one, a pair of bars 2, 2' and a tool carrier 1, are shown. In accordance with the process of the present invention, each tool carrier is provided with a device 3 (31- 35), (figures 2 and 3), 3' (30' - 39'), (figures 4 and 5), 3" (30" - 34"), (figures 6 and 7).

Each and all such devices embodies a spanning condition of bars 2, 2', a bridge 3, 3', 3" and a pair of antagonist members 31, 32; 31', 32'; 31", 32" which include the same bars 2, 2'.

In a preferred embodiment of the present invention the device 3 (figures 2 and 3), includes a conventional axle 00, which is provided with two polar extensions 35, 36, each of them having a screwed end for receiving a wheel 31, 32. The pivots 35 and 36, in their unscrewed section, are shorter than the thickness of wheels 31, 32, whereby, with screwed nuts 33 and 34, which are self-locking, it is possible to adjust the distance between the inner sides of the wheels 31, 32, in order that the same distance is made equal to the real distance between the outer sides of bars 2, 2'. Since the cylindrical walls, coaxial to the wheels and having a shorter diameter then the latter, engage the upper side of the guiding bars, the section cooperating with the bars is that comprised between arc of the wheel and the tangent to the cylindrical wall subtended by the same. In this embodiment, the spanning point coincides substantially with point at which the force acts, so that in this particular case, l' = 0, thus, the bending moment is null.

In another preferred embodiment of the present invention the device 3' (figures 4 and 5), on the top of the tool carrier 1 is provided, by two screws 37', 38', with a support 30'. The projecting poles of such support 30' are provided with two bores 03', which receive, by means of screws 36', screwed nuts 35', and sleeves 33', 34', two antagonist wheels 31' and 32' whose axle has vertical attitude. The support 30', bearing the unit is additionally provided with bores 003' and 039', wherein the former provides a fulcrum and the latter an adjusting means, which acts in connection with the screw 38' and a washer 39'. Thus, by adjusting the inclination of the support 30' around the bore 003' it is possible to set, with accuracy, the tangential distance between the wheels 31', 32'.

In a further preferred embodiment of the present invention the device 3" (figures 6 and 7) on the top of the tool carrier 1 is provided, by welding, with a support 30". The support 30" is comprised by a three step bridge. The vertical poles of the support include a screwed bore 03". Each bore 03" is provided with a rod 31", 32" made of antifriction material, adjustable by a screw nut 33", 34".

In the devices 3' and 3" the distance l' is higher than in device 3, however it must be pointed out that, at parity of a given power on the lever 1 and corresponding power arm, the product of weight arm, times weight is substantially constant, so that varying the weight arm l', varies, in inversely proportional fashion, even the weight.

DEMONSTRATIVE EXAMPLE

The following data are supposed:

P = N 1000;
l= 500 mm (considered as a restrained beam);
E=207000 (steel average);
I= for a rectangular cross-section of width b= 30 mm and height H=12 mm =

$$= \frac{bH^3}{12} = \frac{30*12^3}{12} = 4320 \text{ mm}^4$$

In the conventional case using the formula:

$$F_m = \frac{Pl^3}{192 \, E \, I}$$

it results:

$$F_m = \frac{1000*500^3}{192*207000*4320} = 0,7 \text{ mm}$$

Whereas in the subject case, with l'= 20 and l" = 230 using the formula:

$$F_m = \frac{Pl'^2 \cdot l''^2}{3EIl/2} /2;$$

it results:

$$F_m = \frac{1000*20^2 \cdot 230^2}{3*207000*4320*250} /2 = 0,008 \text{ mm}$$

**Claims**

1. A tile scoring machine for scoring ceramic tiles comprising:

   - two parallel beam-like bars (2, 2'),
   - a bridge member (3, 3', 3", 1) disposed on said bars (2, 2'),
   - a tool carrier (1) supported and/or comprised by said bridge member (3, 3', 3", 1) and having at one end a tile scoring tool
   - wherein said scoring tool carrier (1) is shiftably mounted between said bars (2. 2') in order to be guided thereby as well as to keep said bars (2. 2') duly spaced apart,

   characterized in that

   - a pair of opposed antagonist members (31, 32; 31', 32'; 31", 32") are connected to said bridge (3, 3', 3" 1), each antagonist member (31, 32; 31', 32'; 31", 32") being disposed laterally on a side of the respective bar (2, 2') so as to restrain said bars (2, 2') and thereby prevent lateral deflections of the bars when the tile scoring and/or cutting machine is being used, whereby the camber in the direction of restraint is reduced from

   $$F_m = \frac{Pl^3}{192 \, E \, I}$$

   in the unrestrained condition to

   $$F_m = \frac{Pl'^2 \cdot l''^2}{3EIl/2} /2$$

   in the restrained condition, wherein:

   P = concentrated load applied midway along said bars (2, 2');
l= bar length when the bar (2, 2') is considered as a restrained beam;
l'= distance between the device and the load point;
l"= distance between the device and the load point and the nearest bar fixed end;
E=Modulus of the bar material;
I=Moment of inertia of the bar (2, 2').

2. A tile scoring machine as claimed in claim 1, characterized in that said bridge (3) comprises an axle (0), having a threaded portion (35, 36) at each end and a pair of coaxial pivot members disposed along an unthreaded portion of said axle (0), said antagonist members being formed by a pair of wheels (31, 32) coaxially and slidably disposed on said axle (0), said wheels having a diameter such that when the pivot members are resting on said bars (2. 2'), the inner sides of said wheels (31, 32) partly overlap with the external sides of said bars (2, 2'), a pair of self-locking nuts (33, 34) being provided for securing said wheels (31, 32) in their position on said axle (0) such that the distance between the inner sides of said wheels (31, 32) can be adjusted to match the distance between the external sides of said bars (2, 2') in their unloaded state and such that lateral deflections of said bars (2, 2') can be prevented when the machine is used.

3. A tile scoring machine as claimed in claim 1, characterized in that it comprises a substantially T-shaped support (30') connected to the top of said tool carrier (1) by means of two screws (37', 38') passing through two bores (003', 039) arranged in the T-shaped support (30') at the neck and the lower leg of the T-shape, said antagonist members being in the form of a pair of wheels (31', 32'), each wheel being fixed to each arm of the T-shape by means of a screw (36') passing through a bore (03') in each arm of the T-shape and associated nuts (35'), each wheel (31', 32') being spaced from said support (30') by means of a sleeve member (33', 34'), said wheels (31', 32') being so disposed such that their circumferential surfaces are in contact with the external sides of said bars (2, 2') thereby laterally restraining said bars when the machine is being used.

4. A tile scoring machine as claimed in claim 3, characterized in that said bore (039) arranged at the lower portion of the leg of said T-shaped support (30') is elongated laterally such that said T-shaped support (30') can be partially rotated around the bore (003') located at the neck of said T-shape (30') thereby enabling the angle between said leg (30') and said bars (2, 2') and consequentially the lateral spacing between said wheels (31', 32') with respect to said bars (2, 2') to be adjusted.

5. A tile scoring machine as claimed in claim 1, characterized in that it comprises said antagonist members (31", 32") in the form of a three stepped bridge shaped- support profile (30") welded to the top of said tool carrier (1), said support profile (30") having two vertically extending poles adapted to straddle said bars (2, 2') such that they overlap the external sides of said bars (2, 2') each of said vertical poles being provided with a screwed bore (03") through which is screwed a rod (31", 32") of antifriction material adjustable by means of a nut (33", 34").

**Patentansprüche**

1. Fliesenanritzmaschine zum Anritzen von Keramikfliesen bestehend aus:

   - zwei tragbalkenähnlichen parallelen Stäben (2, 2'),
   - einem über den besagten Stäben (2, 2') angeordnetem Glied (3, 3', 3", 1) in Brücken- form,
   - einem Werkzeugträger (1) von genanntem Glied (3, 3', 3", 1) in Brückenform getragen und/oder aus diesem bestehend und an einem Ende mit einem Fliesenanritzwerkzeug versehen
   - wobei genannter Schneidewerkzeugträger (1) zwischen den genannten Stäben (2, 2') fahrbar montiert ist und so von diesen geführt wird, wobei besagte Stäbe (2, 2') auf entsprechenden Abstand gehalten werden,

   dadurch gekennzeichnet dass

   - ein paar antagonistischer gegenüberliegender Teile (31, 32; 31', 32'; 31", 32"), mit der genannten Brücke (3, 3', 3", 1) verbunden sind, wobei jeder antagonistische Teil (31, 32; 31', 32', 31", 32") seitlich des entsprechenden Stabes (2,2') angeordnet ist um besagte Stäbe (2, 2') einzuklemmen und so zu vermeiden dass die Stäbe sich bei Gebrauch der Anritz- und/oder Schneidemaschine seitlich verbiegen, somit die Durchbiegung, die in der Einklemmungsrichtung entsteht, von

$$F_m = \frac{Pl^3}{192\,E\,I}$$

   was dem Zustand ohne Einklemmung entspricht, auf

$$F_m = \frac{Pl'^2 \cdot l''^2}{3EIl/2} / 2$$

   reduziert wird, was einem Zustand mit Einklemmung entspricht, dabei bedeuten:

   P= die im Mittelpunkt der besagten Stäbe (2,2') konzentrierte Last;

   l= Stablänge wobei der Stab (2, 2') als eingeklemmter Balken betrachtet wird;
   l'= Abstand zwischen Werkzeug und Lastpunkt;
   l"= Abstand zwischen Werkzeug, dem Lastpunkt und dem nächsten Stabeinklemmpunkt;
   E= Stabsmaterialelastizitätsmodul;
   I= Stab (2, 2')-trägheitsmoment.

2. Fliesenanritzmaschine nach Anspruch (1), dadurch gekennzeichnet dass die genannte Brücke (3) eine an jedem Ende mit einem Gewinde versehenen Abschnitt (35, 36) aufweisenden Drehzapfen (0), und ein stiftsförmiges koaxiales Teilepaar, auf einem gewindelosen Abschnitt des genannten Drehzapfens (0) angeordnet, umfasst, wobei die genannten antagonistischen Teile, aus einem koaxialen Räder (31,32) paar bestehend, beweglich auf dem genannten Drehzapfen (0) angeordnet sind und der Durchmesser der genannten Räder gross genug ist damit die stiftsförmigen Teile an den genannten Stäben (2, 2') anzuliegen kommen, wobei die Innenflächen der genannten Räder (31, 32) teilweise die äusseren Seiten der genannten Stäbe (2, 2') überlappen und ein paar selbstsichernder Muttern (33, 34) vorgesehen sind um die oben genannten Räder (31, 32) in ihrer Lage auf dem genannten Drehzapfen (0) zu blockieren so dass bei Lastabwesenheit, der Räder -(31, 32) innenseiteabstand an den Stäbe (2, 2') aussenseitenabstand angepasst werden kann, um so bei Werkzeuggebrauch der Seitenverbiegung der genannten Stäbe-(2, 2') entgegenzuwirken.

3. Fliesenanritzmaschine nach Anspruch 1, dadurch gekennzeichnet dass diese einen, im wesentlichen T-förmigen Halter (30') umfasst, der mit dem Oberteil des genannten Werkzeugträgers (1) mittels zweier Schrauben (37', 38') verbunden ist, geführt durch zwei, im T-förmigen Halter (30') in der Hals- und unteren Beinpartie der T-form angeordneten Bohrungen (003', 039), wobei besagte antagonistische Teile in Form zweier Räder (31', 32') bestehen, und jedes Rad an jeden Arm der T-Form mittels einer, durch die Bohrung (03') geführten Schraube (36') fixiert wird, wobei das gleiche für die entsprechenden Schraubenmuttern (35') gilt und jedes Rad (31', 32') mittels einer Muffe (33', 34') zum Halter (30') auf Abstand gehalten wird, wobei genannte Räder (31', 32') so angeordnet sind dass ihre Aussenflächen mit der äusseren Fläche besagter Stäbe-(2,2') in Berührung kommen somit genannte Stäbe bei Werkzeuggebrauch seitlich eingeklemmt werden.

4. Fliesenanritzmaschine nach Anspruch 3, dadurch gekennzeichnet dass die besagte, im untersten Fussteil des genannten T-förmigen Halters (30') angeordnete Bohrung (039), seitlich verlängert ist womit der besagte T-förmigen Halters (30') teilweise um die, im Hals des T-förmigen Halters (30') angeordnete Bohrung (003') gedreht werden kann und somit die Justierung des zwischen dem Beinteil des T-förmigen Halters (30') und den genannten Stäben (2, 2') existierenden Winkels erlaubt und folgentlich desgleichen für den seitlichen Abstand der besagten Räder - (31', 32') in Übereinstimmung mit den besagten zu justierenden Stäben (2, 2').

5. Fliesenanritzmaschine nach Anspruch 1, dadurch gekennzeichnet dass diese, die genannten antagonistischen Teile (31'',32''), in der Form eines Halters umfasst, der im Querschnitt eine dreistufige Brücke (30'') aufzeigt und dem Oberteil des besagten Werkzeugträgers (1) aufgeschweisst ist, wobei besagter Halter (30'') mit zwei senkrechten Endstücken versehen ist die in der Lage sind die genannten Stäbe (2, 2') einzuklemmen, somit die äusseren Seiten der genannten Stäbe (2 ,2') erfasst werden, wobei jedes der senkrechten Endstücke eine Gewindebohrung (03'') aufweist, in die ein, mit reibungsarmen Material versehenen Bolzen (31'', 32'') festgeschraubt ist, wobei dieser durch eine Gewindemutter (33'', 34'') justierbar ist.

## Revendications

1. Machine à inciser les carreaux destinée à l'incision de carreaux en céramique comprenant:

   - deux barres (2, 2') parallèles en guise de poutre,
   - un élément (3, 3', 3'', 1) en forme de pont disposé sur lesdites barres (2, 2'),
   - un porte outil (1) soutenu et/ou constitué dudit élément (3, 3', 3'', 1) en forme de pont et ayant à une extrémité un outil pour l'incision de carreaux
   - où ledit porte outil (1) inciseur est monté coulissant entre lesdites barres (2, 2') de façon à être guidé par celles-ci en les tenant dûment distanciées l'une de l'autre,

   caractérisée en ce que

   - un couple d'éléments (31, 32; 31', 32'; 31'', 32'') antagonistes contreposés sont connectés au dit pont (3, 3', 3'', 1), chaque élément (31, 32; 31', 32'; 31'', 32'') antagoniste étant disposé latéralement sur un côté de la barre (2, 2') correspondante de façon à pouvoir contenir les deux barres (2, 2') en leur empêchant de fléchir latéralement quand la machine à inciser et/ou découper les carreaux est utilisée, de façon que la flèche agissante dans la direction de conteniment soit réduite de

$$F_m = \frac{Pl^3}{192\ E\ I}$$

valeur correspondante à la condition sans conteniment à

$$F_m = \frac{Pl'^2 \cdot l''^2}{3EIl/2}\ /2$$

dans la condition de conteniment, où:

   P= charge concentrée appliquée au centre desdites barres (2, 2');
   l= longueur de la barre quand la barre (2, 2') est considérée comme poutre encastrée;
   l'= distance entre le dispositif et le point de charge;
   l''= distance entre le dispositif et le point de charge et l'extrémité la plus proche de l'encastre de la barre;
   E= module d'élasticité du matériel de la barre
   I= Moment d'inertie des barres (2, 2').

2. Machine à inciser les carreaux dont à la revendication 1, caractérisée en ce que ledit pont (3) comprend un essieu (0), dont chaque extrémité a une portion (35, 36) filetée et un couple d'éléments coaxiaux pivotants disposés dans une portion non filetée dudit essieu (0), lesdits éléments antagonistes étant composés d'un couple de roues (31, 32) coaxiales et coulissant sur ledit essieu (0), lesdites roues ayant un diamètre tel que lorsque les éléments pivotants reposent sur lesdites barres (2, 2') les côtés intérieurs desdites roues (31, 32) épousent partiellement les côtés extérieurs desdites barres (2, 2'), un couple de dés (33, 34) auto-bioquants ayant été prévu pour bloquer lesdites roues (31,32) dans leur position sur ledit essieu (0) de façon à ce que la distance entre les côtés intérieurs desdites roues (31, 32) peut être ajustée pour rejoindre la distance entre les côtes extérieurs desdites barres (2, 2') en conditions de non-charge de façon à eviter les flexions latérales desdites barres (2, 2') quand la machine est utilisée.

3. Machine à inciser les carreaux dont à la revendication 1, caractérisée en ce qu'elle comprend un support (30') fait substantiellement en forme de "T" connecté au sommet dudit porte outil (1) au moyen de deux vis (37', 38') traversant deux trous (003', 039) pratiqués dans le support (30') en forme de "T" au cou et au pied inférieur du "T", lesdits éléments antagonistes prenant la forme d'un couple de roues (31', 32'), chacune roue étant fixée à chaque bras du "T" au moyen d'une vis (36') transperçant un trou (03') dans chaque bras du "T" ainsi que les dés (35') relatifs, chaque roue (31', 32') étant espacée dudit support (30') au moyen d'un élément (33', 34') à manchon, lesdites roues (31', 32') étant disposées de façon telle que leurs surfaces périphériques soient en contact avec les côtés extérieures desdites barres (2, 2') de façon à ce que lesdites barres soient latéralement bloquées lorsque la machine est utilisée.

4. Machine à inciser les carreaux dont à la revendication 3, caractérisée en ce que ledit trou (039) disposé dans la partie inférieure du pied dudit support (30') en forme de "T" se prolonge latéralement de sorte que ledit support (30') en forme de "T" peut être partiellement tourné autour du trou (003') situé en correspondance du cou du support en forme de "T" (30') permettant de régler l'angle entre ledit pied (30') et lesdites barres (2, 2') et de conséquence le jeu latéral desdites roues (31', 32') en rapport à lesdites barres (2, 2') à régler.

5. Machine à inciser les carreaux dont à la revendication 1, caractérisée en ce qu'elle comprend lesdits éléments antagonistes (31'', 32'') sous forme d'un support profilé en forme de pont ayant une section à trois marches (30'') soudé au sommet dudit porte-outil (1), ledit profilé (30'') de support ayant deux pôles s'étendant verticalement aptes à enfourcher lesdites barres (2, 2') de façon à intéresser les côtés extérieures desdites barres (2, 2') chacun desdits pôles verticaux étant pourvu d'un trou (03'') fileté dans lequel est vissé un goujon (31'', 32'') de matériel antifriction réglable au moyen d'un dé (33'', 34'').

FIG. 1

EP 0 614 738 B1

FIG. 2

FIG. 3

9

EP 0 614 738 B1

FIG. 4

38'
39'
039'
30'
37
35'
1
03'
35'
03
34'
003'
1
35'
33'
31'
35'
3"
36'
36'
1

2
2'
1
38'
30'
37'
36'
35'
1
36'
34'
35'
35'
31'
1
1'
33'
32'
35'
1

FIG. 5

10

FIG. 6

3"

30"    34"  31"    1

33"

32"    03"

03"

1

1    1

1

2    2'    1    1

30"    1

31"

1

1"

33"

32"

1

FIG. 7